# EUROPÄISCHE PATENTSCHRIFT

(11) **EP 1 286 033 B1**
(45) Veröffentlichungstag und Bekanntmachung des Hinweises auf die Patenterteilung: **22.05.2013**
(21) Anmeldenummer: 02017006.4
(22) Anmeldetag: 27.07.2002
(51) Int. Cl.: F02D 31/00, F02D 41/10, F02D 37/02, F02P 5/15

(54) **Verfahren zum Betreiben einer Brennkraftmaschine sowie Anfahrregler für ein Kraftfahrzeug**
Method for operating an internal combustion engine and starting controller for a vehicle
Procédé de fonctionnement d'un moteur à combustion interne et contrôleur pour démarrer un véhicule automobile

(30) Priorität: 21.08.2001 DE 10141003
(43) Veröffentlichungstag der Anmeldung: 26.02.2003
(73) Patentinhaber: Volkswagen Aktiengesellschaft, 38440 Wolfsburg (DE)
(72) Erfinder: Pelz, Norbert, 38479 Tappenbeck (DE); Schultalbers, Matthias, 38536 Meinersen/Ahnsen (DE); Wolf, Andreas, 38518 Gifhorn (DE); Dünow, Peter, Dr., 18196 Kavelstorf (DE)

(56) Entgegenhaltungen:
- EP-A- 0 930 424
- EP-A- 1 079 089
- DE-A1- 10 051 389
- DE-A1- 19 649 424
- DE-A1- 19 802 217

## Beschreibung

Die Erfindung betrifft ein Verfahren zum Betreiben einer Brennkraftmaschine eines Kraftfahrzeuges gemäß dem Oberbegriff des Anspruchs 1 sowie einen Anfahrregler gemäß Anspruch 17.

Beim manuellem Anfahren eines Kraftfahrzeuges muß ein Fahrer die Betätigung von Fahrpedal und Kupplungspedal genau abstimmen, um ein weiches und ruckelfreies Anfahren zu erzielen. Dies gelingt jedoch nicht immer in der gewünschten Weise. In Extremfällen betätigt der Fahrer das Gaspedal zu wenig und läßt die Kupplung zu schnell kommen, dann wird wegen des großen Trägheitsmomentes des Kraftfahrzeuges und des zu geringen Antriebsmomentes des Motors dieser abgewürgt oder es kommt zu einem ruckartigen Anfahren. Andererseits führt ein zu starkes Betätigen des Gaspedals zu einem unerwünschten Aufheulen des Motors.

Aus der EP 0 930 424 A2 ist ein Verfahren und eine Vorrichtung zur Verbesserung des Anfahrverhaltens eines Kraftfahrzeuges bekannt, wobei in einem Drehzahlmodell eine Drehzahl der Brennkraftmaschine in Abhängigkeit von einer Stellung eines Fahrpedales und/oder anderen Parametern des Kraftfahrzeuges als Modelldrehzahl nachgebildet wird und eine Drehzahlabweichung zwischen einer Ist-Drehzahl und der Modell-Drehzahl aus dem Drehzahlmodell bestimmt wird, wobei in Abhängigkeit von dieser Drehzahlabweichung ein Zündwinkel und/oder eine Zylinderfüllung derart beeinflusst wird, daß die Drehzahlabweichung minimiert wird.

Aus der DE 198 02 217 A1 ist ein Verfahren zum ermittler des Fahrzeugantriebsmomentes beim Anfahren eines Fahrzeuges bekannt. Hierbei erfolgt ein modellbasiertes Ermitteln des Leerlaufverhaltens des Motors, vergleichen von Modellausgangswerten mit entsprechenden Messwerten oder davon abgeleiteten Werten und Ermitteln des Fahrzeugantriebsmomentes nach Maßgabe des vorher durchgeführten Vergleiches.

Aus der EP 1 079 089 A2 ist eine Steuereinrichtung für eine Brennkraftmaschine bekannt, welche beim Starten der Brennkraftmaschine für die Kontrolle der Drehzahl den Einlassluftstrom kontrolliert. Hierbei wird eine Drosselklappe in Abhängigkeit der Motordrehzahl eingestellt. In Abhängigkeit einer Differenz zwischen einer vorbestimmten maximalen Motordrehzahl und der aktuellen Motordrehzahl wird von der Einlassluftkontrollsteuerung auf eine Zündwinkelsteuerung umgeschaltet.

Aus der DE 196 49 424 A1 ist eine Drehmomentenabschätzung für eine Motorgeschwindigkeitssteuerung bekannt. Hierbei wird die Motordrehzahl mittels Eingriff in die Zündungssteuerung auf eine erwünschte Referenz-Motordrehzahl eingeregelt.

Der Erfindung liegt die Aufgabe zugrunde, einen Verfahren und einen Anfahrregler der obengenannten Art zur Verfügung zu stellen, welches den Fahrer gezielt beim Anfahren unterstützt.

Diese Aufgabe wird erfindungsgemäß durch ein Verfahren der o.g. Art mit den in Anspruch 1 gekennzeichneten Merkmalen und durch einen Anfahrregler gemäß Anspruch 17 gelöst. Vorteilhafte Ausgestaltungen der Erfindung sind in den abhängigen Ansprüchen angegeben.

Dazu ist es bei einem Verfahren der o.g. Art erfindungsgemäß vorgesehen, daß in einem Drehzahlmodell eine Drehzahl der Brennkraftmaschine in Abhängigkeit von einer Stellung eines Fahrpedals und/oder anderen Parametern des Kraftfahrzeuges als Modelldrehzahl nachgebildet und eine Drehzahlabweichung zwischen einer Istdrehzahl und der Modelldrehzahl aus dem Drehzahlmodell bestimmt wird, wobei in Abhängigkeit von der Drehzahlabweichung ein Zündwinkel und/oder eine Zylinderfüllung derart beeinflusst wird, wobei die Drehzahlabweichung minimiert wird. Mit dem Ausdruck "beeinflusst" ist hierbei eine Regelung eines Änderungsbetrages für Zylinderfüllung bzw. Zündwinkel gemeint, wobei der Änderungsbetrag zu einem Wert für Zündwinkel bzw.

Einstellwerten für die Zylinderfüllung hinzugefügt wird, d.h. es wird beispielsweise ein von anderer Seite vorgegebener Zündwinkel um einen bestimmten Betrag verändert. Zusätzlich wird die Regelung des Zündwinkels und/oder der Zylinderfüllung in Abhängigkeit von einer Motordrehzahl und/oder einer Fahrzeuggeschwindigkeit ausgeblendet.

Dies hat den Vorteil, daß für den Fahrer ein Regler zur Verfügung steht, welcher den Fahrer beim Anfahren unabhängig vom gewählten oder eingelegten Gang zum Erzielen eines ruckelfreien Übergangs unterstützt.

In besonders vorteilhafter Weise wird die Beeinflussung während eines Anfahrens des Kraftfahrzeuges aus dem Stillstand durchgeführt. Hierdurch steht dem Fahrer ein Anfahrregler zur Verfügung, welcher ihn zum Erzielen eines weichen und ruckelfreien Anfahrens unterstützt. Nach Beginn des Anfahrens wird in einer ersten Phase der Zündwinkel und die Zylinderfüllung beeinflußt, wobei nach einem ersten Nulldurchgang der Drehzahlabweichung und wenn eine Geschwindigkeit des Fahrzeuges größer als ein vorbestimmter Wert ist, nur noch der Zündwinkel beeinflußt wird.

Um ein Entgegenwirken von einer Leerlaufregelung und der Beeinflussung des Zündwinkels zu verhindern, wird die Beeinflussung des Zündwinkels ausgesetzt, wenn die Leerlaufregelung in entgegengesetzter Richtung zum Anfahrregler Drehmomente anhebend eingreift.

In einer bevorzugten Ausführungsform wird in dem Drehzahlmodell ein Solldrehmoment über ein PT1-Filter in die Modelldrehzahl umgewandelt, wobei das Solldrehmoment aus einem Wunschdrehmoment des Fahrers gemäß einer Stellung des Fahrpedals abzüglich eines Verlustdrehmomentes bestimmt wird. Die Drehzahlabweichung wird dabei dadurch bestimmt, daß von der Modelldrehzahl die Istdrehzahl abgezogen wird.

Ein Luenberger-Beobachter wird dadurch eingeführt, daß aus einem Quotienten von Istdrehzahl zu Geschwindigkeit des Kraftfahrzeugs über eine Kennlinie ein Faktor bestimmt und mit der Drehzahlabweichung zu einem Proportionalanteil einer Drehmomentänderung multipliziert wird, daß aus der Drehzahlabweichung über einen Integrator ein Integralanteil der Drehmomentänderung bestimmt wird, und daß eine Summe aus Proportionalanteil und Integralanteil der Drehmomentänderung von dem Solldrehmoment vor dem Eingang in das PT1-Filter abgezogen wird.

Zur dynamischen Anpassung des Integrators sowie zur Abstimmung des Drehzahlmodells wird aus dem Quotienten von Istdrehzahl zu Geschwindigkeit des Kraftfahrzeugs über eine Kennlinie eine Verstärkung als Eingangswert für den Integrator bestimmt.

Zur dynamischen Anpassung des PT1-Filters sowie zur Abstimmung des Drehzahlmodells werden aus dem Quotienten von Istdrehzahl zu Geschwindigkeit des Kraftfahrzeugs über eine jeweilige Kennlinie eine Verstärkung sowie eine Zeitkonstante als Eingangswerte für das PT1-Filter bestimmt.

Um sicher zu stellen, daß die Beeinflussung bei vorbestimmten Betriebszuständen des Kraftfahrzeuges einsetzt, wird aus wenigstens einem vorbestimmten, das Kraftfahrzeug betreffenden Wert eine Einschaltbedingung für die Beeinflussung des Zündzeitpunktes und der Zylinderfüllung bestimmt. Der wenigstens eine vorbestimmte Wert umfaßt beispielsweise einen Fehlerwert aus der Bestimmung der Fahrzeuggeschwindigkeit, einen Fehlerwert aus der Bestimmung der Motordrehzahl, ein Leerlauf-Bit, eine Bedingung "Momenteneingriff aktiv" und/oder eine Fahrzeuggeschwindigkeit.

Die Bestimmung eines Regelwertes für die Änderung von Zündwinkel und Zylinderfüllung erfolgt derart, daß der Wert der Drehzahlabweichung mit einem Wert aus einer Kennlinie entsprechend der Drehzahlabweichung zu einem Proportionalanteil einer notwendigen Drehmomentänderung multipliziert wird, daß ein Wert einer Änderung der Istdrehzahl mit einem Wert aus einer Kennlinie entsprechend der Änderung der Istdrehzahl zu einem Differentialanteil einer notwendigen Drehmomentänderung multipliziert wird und daß Proportionalanteil und Differentialanteil der Drehmomentänderung zu einem Reglerausgang für den Zündwinkel und/oder die Zylinderfüllung addiert werden. Der Reglerausgang wird in seinem maximalen und minimalen Wert begrenzt. Der Reglerausgang für die Zylinderfüllung wird mit einem vorbestimmten Faktor multipliziert.

Ferner wird erfindungsgemäß ein Anfahrregler für eine Brennkraftmaschine eines Kraftfahrzeuges vorgeschlagen mit einer ersten Einrichtung zum Nachbilden einer Drehzahl der Brennkraftmaschine in Abhängigkeit von einer Stellung eines Fahrpedals als Modelldrehzahl mittels eines Drehzahlmodells und zum Bestimmen einer Drehzahlabweichung zwischen einer Istdrehzahl und der Modelldrehzahl aus dem Drehzahlmodell, mit einer zweiten Einrichtung zum Bestimmen eines Reglerausgangs zum Beeinflussen des Zündwinkels und der Zylinderfüllung in Abhängigkeit von der Drehzahlabweichung derart, daß die Drehzahlabweichung minimiert ist, wobei die erste Einrichtung zum Ausbilden des Drehzahlmodelles einen PT1-Filter umfasst, der einen Solldrehmoment in die Modelldrehzahl umwandelt und wobei die erste Einrichtung einen integrator umfasst, der einen Integralanteil der Drehzahlabweichung auf das Solldrehmoment rückkoppelt.

Dies hat den Vorteil, daß für den Fahrer ein Regler zur Verfügung steht, welcher den Fahrer beim Anfahren unabhängig vom gewählten oder eingelegten Gang zum Erzielen eines ruckelfreien Übergangs unterstützt.

Zum Sicherstellen einer Regelung nur bei bestimmten Betriebszuständen ist eine dritte Einrichtung zum Bestimmen eines Aktivierungs- und Deaktivierungszeitpunktes jeweils für den Reglerausgang zum Beeinflussen des Zündwinkels und der Zylinderfüllung der zweiten Einrichtung in Abhängigkeit von der Drehzahlabweichung und einer momentanen Fahrzeuggeschwindigkeit vorgesehen.

Die erste Einrichtung umfaßt dabei zusätzlich einen Luenberger-Beobachter, der einen Proportionalanteil der Drehzahlabweichung auf das Solldrehmoment rückkoppelt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine graphische Veranschaulichung des erfindungsgemäßen Verfahrens als Anfahrregler,
- Fig. 2: ein schematisches Blockschaltbild eines erfindungsgemäßen Anfahrreglers,
- Fig. 3: ein schematisches Funktionsdiagramm einer ersten Einrichtung mit Drehzahlmodell und mit Luenberger-Beobachter des Anfahrreglers gemäß Fig. 2,
- Fig. 4: ein schematisches Funktionsdiagramm einer dritten Einrichtung zum Aktivieren bzw. Deaktivieren der Regelung des Anfahrreglers gemäß Fig. 2 und
- Fig. 5: ein schematisches Funktionsdiagramm einer zweiten Einrichtung (Reglereinrichtung) des Anfahrreglers gemäß Fig. 2.

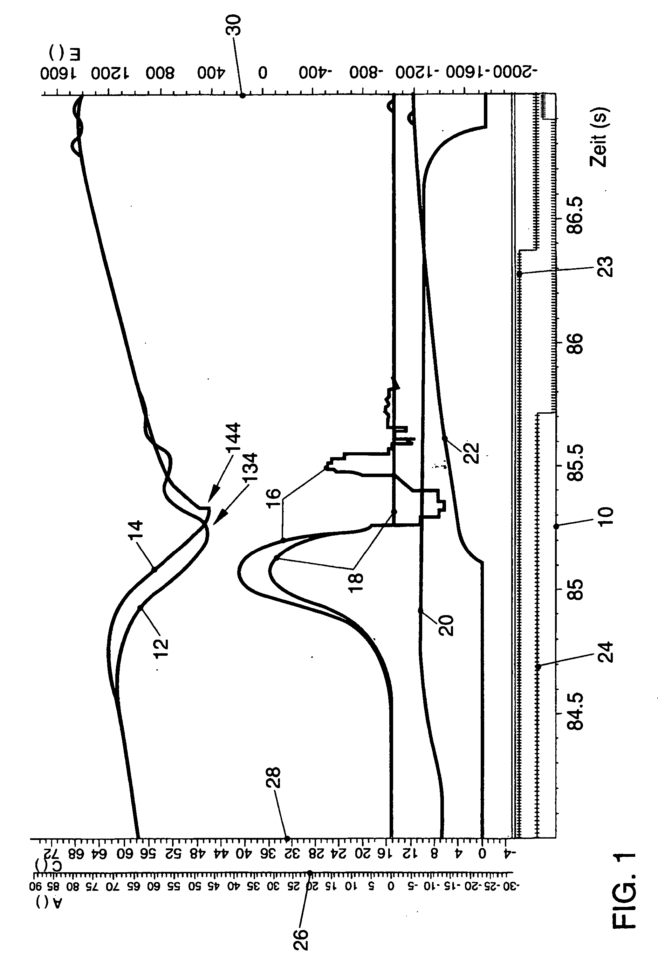

Bei dem erfindungsgemäßen Verfahren zum Betreiben einer Brennkraftmaschine eines Kraftfahrzeuges wird in einem Drehzahlmodell eine Drehzahl der Brennkraftmaschine in Abhängigkeit von einer Stellung eines Fahrpedals als Modelldrehzahl nachgebildet und eine Drehzahlabweichung zwischen einer Istdrehzahl und der Modelldrehzahl aus dem Drehzahlmodell bestimmt. Dann wird in Abhängigkeit von der Drehzahlabweichung ein Zündwinkel und/oder eine Zylinderfüllung derart beeinflußt, daß die Drehzahlabweichung minimiert wird. Dies wird nachfolgend anhand von Fig. 1 näher erläutert, die das erfindungsgemäße Verfahren bei der Funktion eines Anfahrreglers veranschaulicht. Hierzu ist über die Zeit auf einer horizontalen Achse 10 folgendes aufgetragen: Die Istdrehzahl 12 der Brennkraftmaschine, die Modelldrehzahl 14, ein Reglerausgang 16 zum Ändern des Zündwinkels, so daß ein Motormoment entsprechend geändert wird, ein Reglerausgang 18 zum Ändern der Zylinderfüllung, so daß ein Motormoment entsprechend geändert wird, eine Stellung 20 eines Fahrpedals, welches von einem Fahrer manuell betätigt wird, eine Geschwindigkeit 22 des Kraftfahrzeuges, ein Bit 23 B_anf, welches "Anfahrregler aktiv" signalisiert, und ein Kupplungsbit 24. Auf der vertikalen Achse 26 ist ein Wert für den Reglerausgang, auf der vertikalen Achse 28 ist eine Fahrzeuggeschwindigkeit und auf der vertikalen Achse 30 ist eine Istdrehzahl aufgetragen.

Der Fahrer betätigt leicht das Fahrpedal 20, so daß die Istdrehzahl 12 entsprechend ansteigt. Da noch nicht eingekuppelt ist, entspricht zunächst die Istdrehzahl 12 der Modelldrehzahl 14. Durch zunehmendes Einkuppeln seitens des Fahrers fällt jedoch die Istdrehzahl schließlich ab. Da der Fahrer im weiteren Verlauf das Fahrpedal nicht stärker betätigt, fällt die Istdrehzahl 12 schneller als es nach der Modelldrehzahl 14 am günstigsten wäre. Es entsteht eine Drehzahlabweichung in Form einer Differenz zwischen Istdrehzahl 12 und Modelldrehzahl 14. Mit anderem Worten ist das Motormoment für die momentane Anfahrsituation mangels entsprechender Betätigung des Fahrpedals zu niedrig. Dies führt zu einem entsprechenden Reglerausgang 16 und 18 für eine Änderung des Zündwinkels und der Zylinderfüllung derart, daß das Motormoment erhöht wird. In der Folge reduziert sich der Abstand zwischen der Istdrehzahl 12 und der Modelldrehzahl 14 (Drehzahlabweichung wird im Betrag kleiner) bis sich die Graphen für die Istdrehzahl 12 und die Modelldrehzahl 14 treffen. Zu diesem Zeitpunkt wird die Regelung über die Zylinderfüllung (Graph 18) beendet und nur noch der Zündwinkel geändert, so daß die Differenz zwischen der Istdrehzahl 12 und der Modelldrehzahl 14 (Drehzahlabweichung) minimal wird. Mit zunehmender Geschwindigkeit 22 des Kraftfahrzeuges und zunehmender Istdrehzahl 12 der Brennkraftmaschine wird dann auch die Beeinflussung des Zündwinkels (Graph 16) weich ausgeblendet.

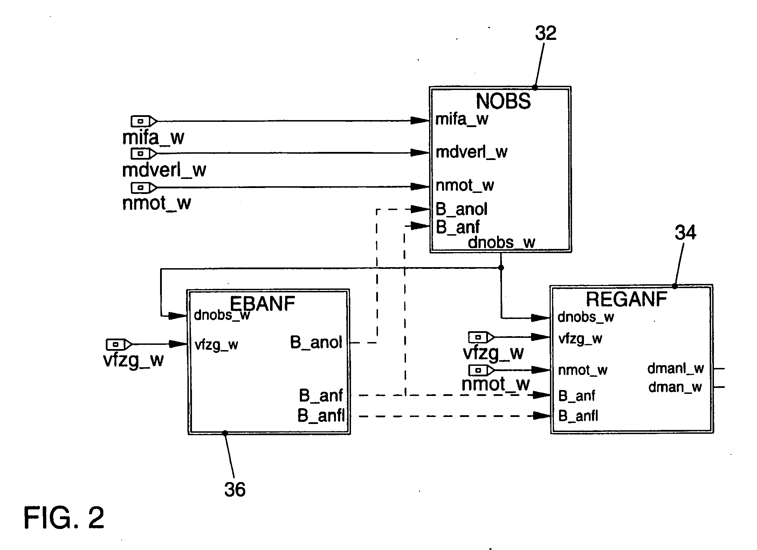

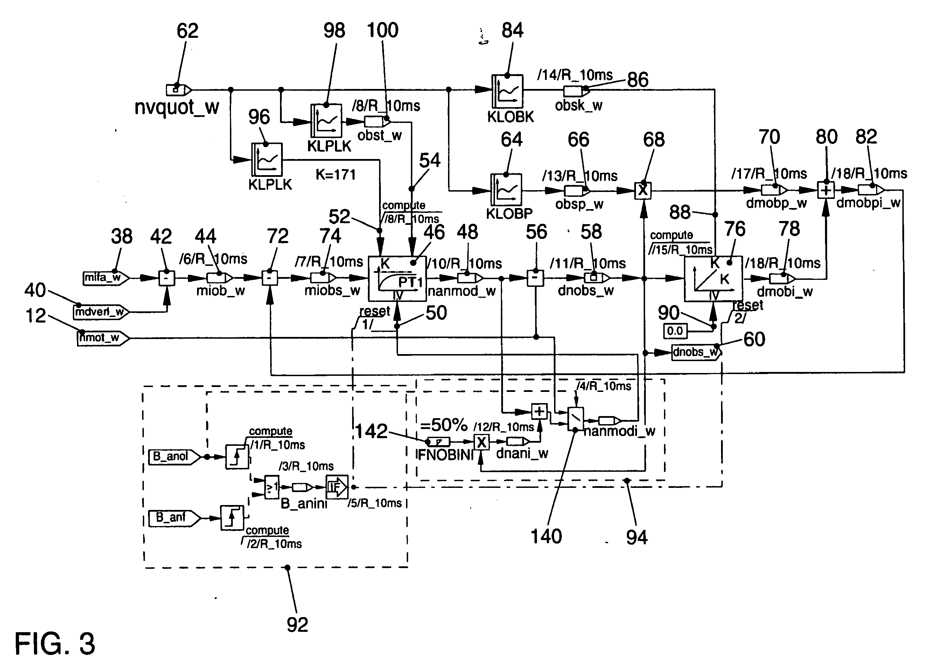

Fig. 2 veranschaulicht den Aufbau eines erfindungsgemäßen Anfahrreglers. Dieser umfaßt eine erste Einrichtung 32 zum Bestimmen der Modelldrehzahl in Abhängigkeit von einer Stellung des Fahrpedals und zum Bestimmen einer Drehzahlabweichung zwischen der Istdrehzahl und der Modelldrehzahl aus dem Drehzahlmodell, eine zweiten Einrichtung 34 zum Bestimmen eines Reglerausgangs zum Ändern eines Zündwinkels und einer Zylinderfüllung in Abhängigkeit von der Drehzahlabweichung derart, daß die Drehzahlabweichung minimiert ist, und eine dritte Einrichtung 36 zum Bestimmen eines Aktivierungs- und Deaktivierungszeitpunktes jeweils für den Reglerausgang für Zündwinkel und Zylinderfüllung der zweiten Einrichtung in Abhängigkeit von der Drehzahlabweichung und einer momentanen Fahrzeuggeschwindigkeit. Ein beispielhafter Aufbau und eine Funktionsweise dieser drei Einrichtungen 32, 34 sowie 36 wird nachfolgend anhand der Fig. 3 bis 5 erläutert.

Fig. 3 veranschaulicht die Funktionsweise der ersten Einrichtung 32. Ein Eingang 38 erhält ein Wunschdrehmoment mifa_w des Fahrers gemäß einer Stellung des Fahrpedals, ein Eingang 40 erhält ein Verlustdrehmoment mdverl_w und in Subtrahierer 42 werden diese beiden Drehmomentwerte voneinander abgezogen zu einem Solldrehmoment miob_w in Speicherstelle 44. Ein PT1-Filter 46 erhält als Eingang das Solldrehmoment miobs_m und setzt dieses in eine Modelldrehzahl des Anfahrreglers nanmod_w in Speicherstelle 48 um. Hierzu erhält das PT1-Filter 46 einen Initialisierungswert (iv) 50, eine Verstärkung K 52 und eine Zeitkonstante (T) 54, deren Bestimmung später erläutert wird. Im Subtrahierer 56 wird von der Modelldrehzahl nanmod_w die Istdrehzahl 12 der Brennkraftmaschine abgezogen und so eine Drehzahlabweichung dnobs_w in Speicherstelle 58 erhalten. Dieser Wert der Drehzahlabweichung dnobs_w wird bei 60 als Ausgangswert der ersten Einrichtung ausgegeben.

Neben dem Drehzahlmodell des PT1-Filters 46 enthält die erste Einrichtung 32 ferner einen sogen. Luenberger-Beobachter. Hierzu wird aus einem Quotienten von Drehzahl zu Geschwindigkeit nvquot_w in Speicherstelle 62 über eine Kennlinie KLOBP 64 ein Faktor obsp_w in Speicherstelle 66 bestimmt in einem Multiplizierer 68 mit der Drehzahlabweichung dnobs_w aus Speicherstelle 58 zu einem Proportionalanteil der Drehmomentänderung dmobp_w in Speicherstelle 70 multipliziert und im Subtrahierer 72 von dem Solldrehmoment miob_w 44 abgezogen, so daß in Speicherstelle 74 ein entsprechend modifiziertes Solldrehmoment miobs_w als Eingang für das PT1-Filter 46 zur Verfügung steht.

Der Luenberger-Beobachter ist ferner noch durch einen Integralanteil ergänzt. Hierzu wird die Drehzahlabweichung dnobs_w aus Speicherstelle 58 einem Integrator 76 zugeführt, der die Drehzahlabweichung dnobs_w in einen Integralanteil der Drehmomentänderung dmbi_w in Speicherstelle 78 umsetzt. Dieser Integralanteil der Drehmomentänderung dmobi_w wird in Addierer 80 zum Proportionalanteil der Drehmomentänderung dmobp_w in Speicherstelle 70 hinzuaddiert, so daß man eine Drehmomentänderung mit Proportionalanteil und Integralanteil dmobpi_w in Speicherstelle 82 erhält. Dadurch fließt in die Subtraktion bei Subtrahierer 72 der Integralanteil dmobi_w 78 mit ein. Aus dem Quotienten von Drehzahl zu Geschwindigkeit nvquot_w in Speicherstelle 62 wird über eine Kennlinie KLOBK 84 ein Wert obsk_w in Speicherstelle 86 bestimmt und als Eingangswert für die Verstärkung K 88 dem Integrator 76 zugeführt. Ferner erhält der Integrator 76 einen Initialisierungswert (iv) 90. In einem Block 92 wird die Initialisierung von PT1-Filter 46 und Integrator 76 zu bestimmten Bedingungen ausgelöst, wie noch später beschrieben wird. Der Integrator 76 erhält immer den Initialisierungswert 0. Der Initialisierungswert 50 für das PT1-Filter 46 wird in einem Block 94 in Abhängigkeit vom Fortschritt des Anfahrens bestimmt, wie ebenfalls später näher beschrieben wird. Der Eingangswert für die Verstärkung K 52 für das PT1-Filter 46 wird aus dem Quotienten von Drehzahl zu Geschwindigkeit nvquot_w in Speicherstelle 62 mittels einer Kennlinie KLPLK 96 bestimmt. Der Eingangswert T 64 (Zeitkonstante) für das PT1-Filter 46 wird aus dem Quotienten von Drehzahl zu Geschwindigkeit nvquot_w in Speicherstelle 62 mittels einer Kennlinie KLPLT 98 bestimmt und in Speicherstelle 100 als Wert obst_w geschrieben.

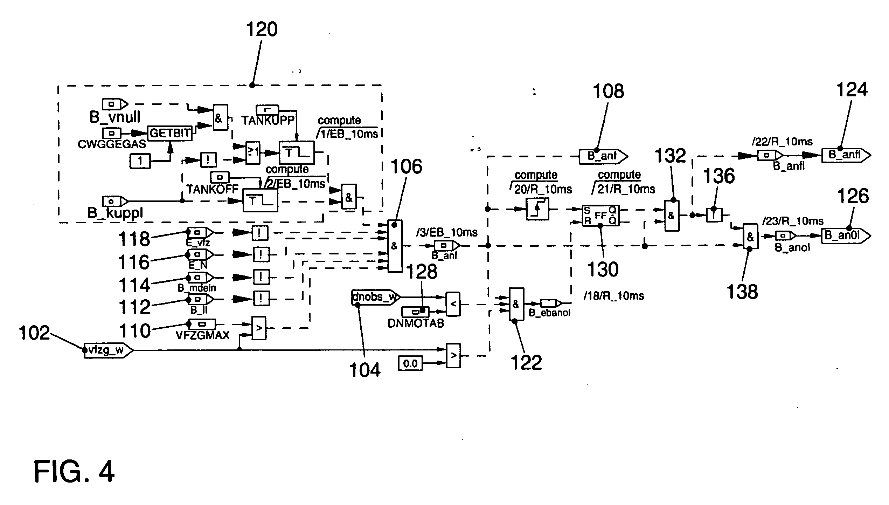

Der Aufbau bzw. die Funktionsweise der dritten Einrichtung 36 wird nunmehr anhand der Fig. 4 beschrieben. Die dritte Einrichtung 36 erhält als Eingangswerte bei 102 die momentane Fahrzeuggeschwindigkeit vfzg_w und bei 104 die Drehzahlabweichung dnobs_w aus der ersten Einrichtung. Mit diesen und ggf. weiteren Werten bestimmt die dritte Einrichtung 36, ob Einschaltbedingungen für den erfindungsgemäßen Anfahrregler erfüllt sind und aktiviert bzw. deaktiviert die Änderung des Zündwinkels bzw. der Zylinderfüllung zur Regelung des vom Motor abgegebenen Drehmomentes. Die Einflußnahme auf den Zündwinkel bzw. die Zylinderfüllung wird dabei getrennt aktiviert bzw. deaktiviert. An einem UND-Gatter 106 müssen verschiedene Bedingungen gleichzeitig erfüllt sein, dann wird ein Bit für "Anfahrregler aktiv mit Zündwinkelverstellung" B_anf gesetzt und an der Ausgabestelle 108 ausgegeben. Die abgefragten Bedingungen umfassen in dem dargestellten Beispiel folgendes: Die Fahrzeuggeschwindigkeit aus dem Eingang 102 muß größer sein als ein vorbestimmter Wert VFZGMAX in Speicherstelle 110; ein Bit B_II 112 für die Bedingung "Leerlauf" darf nicht gesetzt sein; ein Bit B_mdein 114 für die Bedingung "Momenteneingriff aktiv" darf nicht gesetzt sein; ein Fehlerbit für die Drehzahl E_n 116 darf nicht gesetzt sein; ein Fehlerbit für die Fahrzeuggeschwindigkeit E_vfz 118 darf nicht gesetzt sein. Ferner erfolgt in einem Block 120 eine Kupplungsbit- und Plausibilitätsprüfung, dessen Ergebnis positiv im UND-Gatter 106 ankommen muß.

In Abhängigkeit von weiteren Bedingungen wird wahlweise ein Bit für "Anfahrregler aktiv ohne Änderung Zylinderfüllung" B_anol oder ein Bit für "Anfahrregler aktiv mit Änderung Zylinderfüllung" B_anfl gesetzt und an den Ausgabestellen 124, 126 ausgegeben. Die Auswahl, ob das Bit B_anfl oder B_anol gesetzt wird erfolgt dabei folgendermaßen: Beim ersten Setzen des Bits B_anf wird in einem FLIPFLOP 130 der Seteingang S aktiviert. Daraufhin wird der Ausgang Q hoch gesetzt und ein UND-Gatter 132 schaltet das Bit B_anfl auf den Ausgang 124. An einem weiteren UND-Gatter 122 werden verschiedene weitere Bedingungen abgefragt. Diese abgefragten Bedingungen umfassen in dem dargestellten Beispiel folgendes: Die Fahrzeuggeschwindigkeit aus dem Eingang 102 muß größer als null sein; die Drehzahlabweichung aus dem Eingang 104 muß kleiner als ein vorbestimmter Wert DNMOTAB in Speicherstelle 128 sein; das Bit für "Anfahrregler aktiv mit Zündwinkelverstellung B_anf" muß gesetzt sein. Mit anderen Worten: Der Reseteingang R des FLIPFLOP 130 wird im Bereich des ersten Schnittpunktes (134 in Fig. 1) von Modelldrehzahl 14 und Istdrehzahl 12 (Drehzahlabweichung nahe null) aktiviert. Dann wird der Ausgang Q des FLIPFLOP 130 "niedrig/low", der Ausgang des UND-Gatters 132 wird "niedrig/low", wodurch wegen der Negation 136 ein weiteres UND-Gatter 138 durchschaltet und das Bit B_anol am Ausgang 126 ausgibt. Gleichzeitig fällt das Bit B_anfl am Ausgang 124 weg. Dadurch ist das Anfahren in zwei Phasen geteilt, vor dem Punkt 144 (erste Phase) und nach dem Punkt 144 (zweite Phase). In der ersten Phase erfolgt eine Einflußnahme des Anfahrreglers auf das Motordrehmoment über den Zündwinkel (Zündpfad, schnelle Reaktion des Drehmomentes) und die Zylinderfüllung (Luftpfad, langsame Reaktion des Drehmomentes). In der zweiten Phase nimmt der Anfahrregler nur noch über eine Änderung des Zündwinkels auf das Motordrehmoment Einfluß.

Deswegen sind in Block 92 in Fig. 3 zwei Bedingungen für einen Reset von PT1-Filter 46 und Integrator 76 vorgesehen. Zunächst erfolgt ein Reset am Beginn des Anfahrvorganges, wenn B_anf das erste mal gesetzt wird. Als Initialisierungswert 50 für das PT1-Filter 46 wird in Block 94 die momentane Istdrehzahl 12 der Brennkraftmaschine bestimmt. Beim Übergang in die zweite Phase, d.h. kurz nach dem Schnittpunkt 134 (Fig. 1), erfolgt wegen der positiven Flanke des Bits B_anol, d.h. wenn die Regelung des Luftpfades abgeworfen wird, eine erneute Initialisierung von PT1-Filter 46 und Integrator 76. Hierbei wird jedoch in Block 94 als Initialisierungswert 50 für das PT1-Filter 46 mittels des Schalters 140 ein Wert aus dem Inhalt FNIBINI der Speicherstelle 142, aus der Drehzahlabweichung dnobs_w aus der Speicherstelle 58 und aus der Modelldrehzahl nanmod_w aus der Speicherstelle 48 berechnet. Dies erklärt in Fig. 1 den Sprung der Modelldrehzahl 14 am Punkt 144.

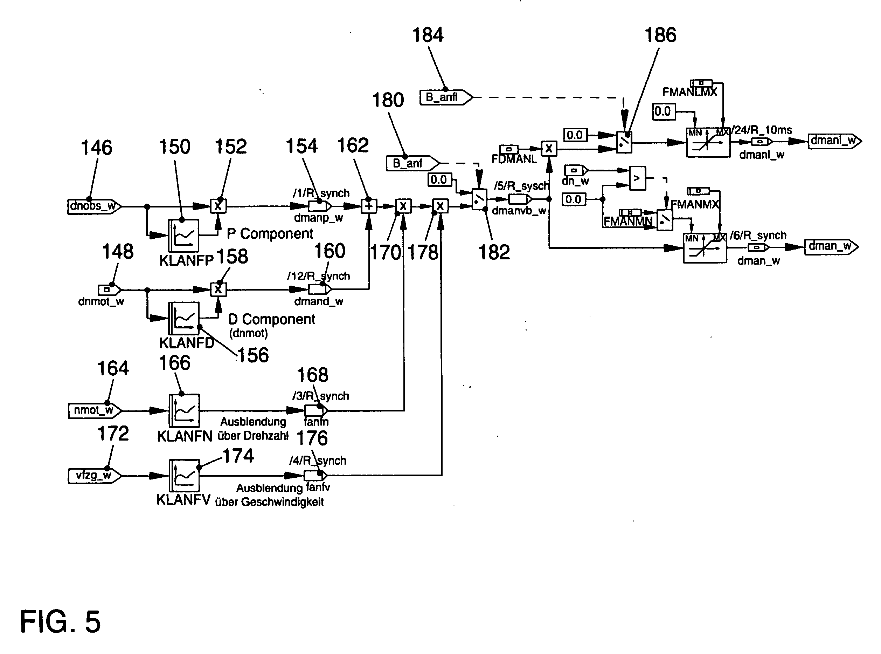

Fig. 5 zeigt schließlich den eigentlichen Regler 34, der aus der Drehzahlabweichung dnobs_w am Eingang 146 und der Änderung der Istdrehzahl dnmot_w in Speicherstelle 148 den Reglerausgang für die Drehmomentänderung mittels Beeinflussung der Zylinderfüllung dmanl_w und die Drehmomentänderung mittels Beeinflussung des Zündzeitpunktes dman_w bestimmt. Hierzu wird aus einer Kennlinie KLANFP 150 ein Faktor in Abhängigkeit von dnobs_w ermittelt und im Multiplikator 152 mit dnobs_w zu einem Proportionalanteil des Reglerausgangs dmanp_w in Speicherstelle 154 multipliziert. Ferner wird aus einer Kennlinie KLANFD 156 ein Faktor in Abhängigkeit von dnmot_w ermittelt und im Multiplikator 158 mit dnmot_w zu einem Differentialanteil des Reglerausgangs dmand_w in Speicherstelle 160 multipliziert. Im Addierer 162 werden dieser Proportional- und Integralanteil aus den Speicherstellen 154, 160 zusammen geführt. Aus der Istdrehzahl nmot_w am Eingang 164 wird über eine Kennlinie KLANFN 166 ein Faktor fanfn in Speicherstelle 168 berechnet, mit dem über den Multiplikator 170 der Reglerausgang mit zunehmender Istdrehzahl ausgeblendet wird. Aus der Fahrzeuggeschwindigkeit vfzg_w am Eingang 172 wird über eine Kennlinie KLANFV 174 ein Faktor fanfv in Speicherstelle 176 berechnet, mit dem über den Multiplikator 178 der Reglerausgang mit zunehmender Fahrzeuggeschwindigkeit ausgeblendet wird. Die Reglerausgänge dmanl_w und dman_w werden in ihrem jeweiligen Maximal- und Minimalwert begrenzt. Über den Eingang 180 und Schalter 182 wird die Regelung nur aktiviert, wenn das Bit B_anf gesetzt ist. Über den Eingang 184 und den Schalter 186 wird die Regelung der Zylinderfüllung nur aktiviert, wenn das Bit B_anfl gesetzt ist.

Der Erfindungsgemäße Anfahrregler verringert ein Absinken der Istdrehzahl 12 beim Anfahrvorgang und unterdrückt Schwingungen beim Anfahrvorgang (Antiruckelregelung). Diese Schwingungsunterdrückung kann jedoch auch bei einem Gangwechsel aktiviert werden. Die Erkennung, welcher Gang gerade eingelegt ist erfolgt dabei über den Quotienten aus Drehzahl zu Geschwindigkeit nvquot_w in Speicherstelle 62 (Fig. 3). Bei einem typischen Anfahrvorgang bricht die Istdrehzahl bzw. Motordrehzahl 12 während des Einkuppelns naturgemäß als Folge des zusätzlichen Kupplungsmomentes ein. Die Höhe des Einbruches hängt von der Dynamik des Einkuppelns und vom Drehzahlniveau zu Beginn des Vorganges ab. Der Anfahrregler wirkt diesem Drehzahleinbruch durch Einflußnahme auf das vom Motor abgegebene Drehmoment gezielt entgegen. Der Anfahrregler genügt dabei den verschiedenen Forderungen nach Laufruhe, Wirksamkeit, Plausibilität sowie Wirtschaftlichkeit und greift lediglich unterstützend ein, um dem Fahrer den Anfahrvorgang oder einen Gangwechsel zu erleichtern. Hierzu wird aus dem Drehzahlmodell (PT1-Filter 46) auf Basis des Fahrerwunschmomentes eine Modelldrehzahl ermittelt. Aus der Differenz von Modelldrehzahl und Motordrehzahl wird der Anfahrvorgang oder ein Gangwechsel identifiziert. Ist dies geschehen, so wird das Fahrerwunschmoment entsprechend angehoben.

Ein wesentlicher Vorteil des erfindungsgemäßen Anfahrreglers liegt in der strikten Trennung von Eingriffen in die Momentenbilanz auf dem schnelleren Zündungspfad (Zündwinkeländerung) einerseits und auf dem langsameren Füllungspfad (Zylinderfüllungsänderung) andererseits. Während des eigentlichen Anfahr- oder Schaltvorgangs (erste Phase) mit einbrechender Motordrehzahl ist sowohl der schnelle als auch der langsame Eingriff aktiv. Die anschließenden Schwingungen im Antriebsstrang in der zweiten Phase werden nur noch durch Eingriffe auf dem schnelleren Zündungspfad bedämpft.

Die Modelldrehzahl nanmod_w 48 wird aus einem relativ langsamen Verzögerungsglied 1. Ordnung (PT1-Filter 46) berechnet. Die zweite Phase beginnt nicht genau am Schnittpunkt 134 sondern etwas später, weil in Speicherstelle 128 (Fig. 4) ein negativer Wert ungleich null eingetragen ist. Dieser bestimmt den Punkt 144 (Fig. 1). Die verschiedenen erwähnten Kennlinien dienen zum Abstimmen des Drehzahlmodells auf die realen Gegebenheiten.

## Patentansprüche

1. Verfahren zum Betreiben einer Brennkraftmaschine eines Kraftfahrzeuges wobei in einem Drehzahlmodell eine Drehzahl der Brennkraftmaschine in Abhängigkeit von einer Stellung eines Fahrpedals und/oder anderen Parametern des Kraftfahrzeuges als Modelldrehzahl nachgebildet und eine Drehzahlabweichung zwischen einer Istdrehzahl und der Modelldrehzahl aus dem Drehzahlmodell bestimmt wird, wobei in Abhängigkeit von der Drehzahlabweichung ein Zündwinkel und/oder eine Zylinderfüllung derart beeinflußt wird, daß die Drehzahlabweichung minimiert wird,
**dadurch gekennzeichnet, dass** die Regelung von Zündwinkel und/oder Zylinderfüllung in Abhängigkeit von einer Motordrehzahl und/oder einer Fahrzeuggeschwindigkeit ausgeblendet wird.

2. Verfahren nach Anspruch 1, **dadurch gekennzeichnet, daß** die Beeinflussung während eines Anfahrens des Kraftfahrzeuges aus dem Stillstand durchgeführt wird.

3. Verfahren nach Anspruch 2, **dadurch gekennzeichnet, daß** nach Beginn des Anfahrens in einer ersten Phase der Zündwinkel und die Zylinderfüllung beeinflußt wird, wobei nach einem ersten Nulldurchgang der Drehzahlabweichung und wenn eine Geschwindigkeit des Fahrzeuges größer als ein vorbestimmter Wert ist, nur noch der Zündwinkel beeinflußt wird.

4. Verfahren nach wenigstens einem der vorhergehenden Ansprüche, **dadurch gekennzeichnet, daß** die Beeinflussung des Zündwinkels ausgesetzt wird, wenn die Leerlaufregelung in entgegengesetzter Richtung zur Beeinflussung des Zündwinkels Drehmomente anhebend eingreift.

5. Verfahren nach wenigstens einem der vorhergehenden Ansprüche, **dadurch gekennzeichnet, daß** in dem Drehzahlmodell ein Solldrehmoment über ein PT1-Filter in die Modelldrehzahl umgewandelt wird.

6. Verfahren nach Anspruch 5, **dadurch gekennzeichnet, daß** das Solldrehmoment aus einem Wunschdrehmoment des Fahrers gemäß einer Stellung des Fahrpedals abzüglich eines Verlustdrehmomentes bestimmt wird.

7. Verfahren nach Anspruch 5 oder 6, **dadurch gekennzeichnet, daß** die Drehzahlabweichung dadurch bestimmt wird, daß von der Modelldrehzahl die Istdrehzahl abgezogen wird.

8. Verfahren nach wenigstens einem der Ansprüche 5 bis 7, dadurch gekennzelchhet, daß aus einem Quotienten von Istdrehzahl zu Geschwindigkeit des Kraftfahrzeugs über eine Kennlinie ein Faktor bestimmt und mit der Drehzahlabweichung zu einem Proportionalanteil einer Drehmomentänderung multipliziert wird, daß aus der Drehzahlabweichung über einen Integrator ein Integralanteil der Drehmomentänderung bestimmt wird, und daß eine Summe aus Proportionalanteil und Integralanteil der Drehmomentänderung von dem Solldrehmoment vor dem Eingang in das PT1-Filter abgezogen wird.

9. Verfahren nach Anspruch 8, **dadurch gekennzeichnet, daß** aus dem Quotienten von Istdrehzahl zu Geschwindigkeit des Kraftfahrzeugs über eine Kennlinie eine Verstärkung als Eingangswert für den Integrator bestimmt wird.

10. Verfahren nach wenigstens einem der Ansprüche 5 bis 9, **dadurch gekennzeichnet, daß** aus dem Quotienten von Istdrehzahl zu Geschwindigkeit des Kraftfahrzeugs über eine Kennlinie eine Verstärkung als Eingangswert für das PT1-Filter bestimmt wird.

11. Verfahren nach wenigstens einem der Ansprüche 5 bis 10, **dadurch gekennzeichnet, daß** aus dem Quotienten von Istdrehzahl zu Geschwindigkeit des Kraftfahrzeugs über eine Kennlinie eine Zeitkonstante als Eingangswert für das PT1-Filter bestimmt wird.

12. Verfahren nach wenigstens einem der vorhergehenden Ansprüche, **dadurch gekennzeichnet, daß** aus wenigstens einem vorbestimmten, das Kraftfahrzeug betreffenden Wert eine Einschaltbedingung für die Beeinflussung des Zündzeitpunktes und der Zylinderfüllung bestimmt wird.

13. Verfahren nach Anspruch 12, **dadurch gekennzeichnet, daß** der wenigstens eine vorbestimmte Wert einen Fehlerwert aus der Bestimmung der Fahrzeuggeschwindigkeit, einen Fehlerwert aus der Bestimmung der Motordrehzahl, ein Leerlauf-Bit, eine Bedingung "Momenteneingriff aktiv" und/oder eine Fahrzeuggeschwindigkeit umfaßt.

14. Verfahren nach wenigstens einem der vorhergehenden Ansprüche, **dadurch gekennzeichnet, daß** der Wert der Drehzahlabweichung mit einem Wert aus einer Kennlinie entsprechend der Drehzahlabweichung zu einem Proportionalanteil einer notwendigen Drehmomentänderung multipliziert wird, daß ein Wert einer Änderung der Istdrehzahl mit einem Wert aus einer Kennlinie entsprechend der Änderung der Istdrehzahl zu einem Differentialanteil einer notwendigen Drehmomentänderung multipliziert wird und daß Proportionalanteil und Differentialanteil der Drehmomentänderung zu einem Reglerausgang für den Zündwinkel und/oder die Zylinderfüllung addiert werden.

15. Verfahren nach Anspruch 14, **dadurch gekennzeichnet, daß** der Reglerausgang in seinem maximalen und minimalen Wert begrenzt wird.

16. Verfahren nach Anspruch 14 oder 15, **dadurch gekennzeichnet, daß** der Reglerausgang für die Zylinderfüllung mit einem vorbestimmten Faktor multipliziert wird.

17. Anfahrregler für eine Brennkraftmaschine eines Kraftfahrzeuges welcher zur Durchführung eines Verfahrens nach einem der Ansprüche 1 bis 16 ausgebildet ist, mit einer ersten Einrichtung (32) zum Nachbilden einer Drehzahl der Brennkraftmaschine in Abhängigkeit von einer Stellung eines Fahrpedals als Modelldrehzahl (14) mittels eines Drehzahlmodells (46) und zum Bestimmen einer Drehzahlabweichung (58) zwischen einer Istdrehzahl (12) und der Modelldrehzahl (14) aus dem Drehzahlmodell (46), mit einer zweiten Einrichtung (34) zum Bestimmen eines Reglerausgangs zum Beeinflussen des Zündwinkels und der Zylinderfüllung in Abhängigkeit von der Drehzahlabweichung (58) derart, daß die Drehzahlabweichung (58) minimiert ist, wobei die erste Einrichtung (32) zum Ausbilden des Drehzahlmodells einen PT1-Filter (46) umfaßt, der ein Solldrehmoment (74) in die Modelldrehzahl (14, 48) umwandelt, und wobei die erste Einrichtung (32) einen Integrator (76) umfaßt, der einen Integralanteil der Drehzahlabweichung (78) auf das Solldrehmoment (44) rückkoppelt.

18. Anfahrregler nach Anspruch 17, dadurch gekennzelchnet, daß eine dritte Einrichtung (36) zum Bestimmen eines Aktivierungs- und Deaktivierungszeitpunktes jeweils für den Reglerausgang zum Beeinflussen des Zündwinkel und der Zylinderfüllung der zweiten Einrichtung (34) in Abhängigkeit von der Drehzahlabweichung (58) und einer momentanen Fahrzeuggeschwindigkeit (22) vorgesehen ist.

19. Anfahrregler nach Anspruch 17, **dadurch gekennzeichnet, daß** die erste Einrichtung (32) einen Luenberger-Beobachter umfaßt, der einen Proportionalanteil der Drehzahlabweichung (70) auf das Solldrehmoment (44) rückkoppelt.

## Claims

1. Method for operating an internal combustion engine of a motor vehicle, wherein in a rotational speed model a rotational speed of the internal combustion engine is modelled as a function of a position of an accelerator pedal and/or other parameters of the motor vehicle as a model rotational speed, and a rotational speed deviation between an actual rotational speed and the model rotational speed is determined from the rotational speed model, wherein an ignition angle and/or a cylinder charge are influenced as a function of the rotational speed deviation in such a way that the rotational speed deviation is minimized,
**characterized in that** the control of the ignition angle and/or cylinder charge is gated out as a function of an engine rotational speed and/or a vehicle speed.

2. Method according to Claim 1, **characterized in that** the influencing process is carried out during starting of the motor vehicle from the stationary state.

3. Method according to Claim 2, **characterized in that** after the beginning of the starting in a first phase the ignition angle and the cylinder charge are influenced, wherein after a first zero crossing of the rotational speed deviation and if the speed of the vehicle is higher than a predetermined value, the ignition angle is still influenced.

4. Method according to at least one of the preceding claims, **characterized in that** the influencing of the ignition angle is suspended if the idling controller intervenes in the opposite direction in order to influence the ignition angle in a way which increases the torque values.

5. Method according to at least one of the preceding claims, **characterized in that** in the rotational speed model a setpoint torque is converted into the model rotational speed by means of a PT1 filter.

6. Method according to Claim 5, **characterized in that** the setpoint torque is determined from a desired torque of the driver according to a position of the accelerator pedal minus a torque loss.

7. Method according to Claim 5 or 6, **characterized in that** the rotational speed deviation is determined by virtue of the fact that the actual rotational speed is subtracted from the model rotational speed.

8. Method according to at least one of Claims 5 to 7, **characterized in that** a factor is determined from a quotient of the actual rotational speed with respect to the speed of the motor vehicle by means of a characteristic curve and is multiplied by the rotational speed deviation with respect to a proportional component of a change in torque, **in that** an integral component of the change in torque is determined from the rotational speed deviation by means of an integrator, and **in that** a sum of the proportional component and the integral component of the change in torque is subtracted from the setpoint torque upstream of the input into the PT1 filter.

9. Method according to Claim 8, **characterized in that** a gain value is determined as an input value for the integrator from the quotient of the actual rotational speed with respect to the speed of the motor vehicle by means of a characteristic curve.

10. Method according to at least one of Claims 5 to 9, **characterized in that** a gain value is determined as an input value for the PT1 filter from the quotient of the actual rotational speed with respect to the speed of the motor vehicle by means of a characteristic curve.

11. Method according to at least one of Claims 5 to 10, **characterized in that** a time constant is determined as an input value for the PT1 filter from the quotient of the actual rotational speed with respect to the speed of the motor vehicle by means of a characteristic curve.

12. Method according to at least one of the preceding claims, **characterized in that** a switch-on condition for influencing of the ignition time and the cylinder charge is determined from at least one predetermined value which relates to the motor vehicle.

13. Method according to Claim 12, **characterized in that** the at least one predetermined value comprises a fault value from the determination of the vehicle speed, a fault value from the determination of the engine speed, an idling bit, a "torque intervention active" condition and/or a vehicle speed.

14. Method according to at least one of the preceding claims, **characterized in that** the value of the rotational speed deviation is multiplied by a value from a characteristic curve corresponding to the rotational speed deviation with respect to a proportional component of a necessary change in torque, **in that** a value of a change in the actual rotational speed is multiplied by a value from a characteristic curve corresponding to the change in the actual rotational speed with respect to a differential component of a necessary change in torque, and **in that** the proportional component and the differential component of the change in torque are added to a controller output for the ignition angle and/or the cylinder charge.

15. Method according to Claim 14, **characterized in that** the controller output is limited in its maximum value and its minimum value.

16. Method according to Claim 14 or 15, **characterized in that** the controller output for the cylinder charge is multiplied by a predetermined factor.

17. Starting controller for an internal combustion engine of a motor vehicle which is designed to carry out a method according to one of Claims 1 to 16, having a first apparatus (32) for modelling a rotational speed of the internal combustion engine as a function of a position of an accelerator pedal as a model rotational speed (14) by means of a rotational speed model (46) and for determining a rotational speed deviation (58) between an actual rotational speed (12) and the model rotational speed (14) from the rotational speed model (46), having a second apparatus (34) for determining a controller output for influencing the ignition angle and the cylinder charge as a function of the rotational speed deviation (58) in such a way that the rotational speed deviation (58) is minimized, wherein the first apparatus (32) comprises, for the formation of the rotational speed model, a PT1 filter (46) which converts a setpoint torque (74) into the model rotational speed (14, 48), and wherein the first apparatus (32) comprises an integrator (76) which feeds back an integral component of the rotational speed deviation (78) to the setpoint torque (44).

18. Starting controller according to Claim 17, **characterized in that** a third apparatus (36) is provided for respectively determining an activation and deactivation time for the controller output for influencing the ignition angle and the cylinder charge of the second apparatus (34) as a function of the rotational speed deviation (58) and an instantaneous vehicle speed (22).

19. Starting controller according to Claim 17, **characterized in that** the first apparatus (32) comprises a Luenberger observer which feeds back a proportional component of the rotational speed deviation (70) to the setpoint torque (44).

## Revendications

1. Procédé de conduite d'un moteur à combustion interne de véhicule automobile, dans lequel un modèle de régime de rotation imite le régime de rotation du moteur à combustion interne en fonction de la position de la pédale d'accélération et/ou d'autres paramètres du véhicule automobile en tant que régime de rotation modélisé et dans lequel l'écart entre le régime de rotation effectif et le régime de rotation modélisé est déterminé à partir du modèle du régime de rotation, l'angle d'allumage et/ou le taux de remplissage des cylindres étant modifié en fonction de l'écart entre les régimes de rotation de manière à minimiser l'écart entre les régimes de rotation,
**caractérisé en ce que**
la régulation de l'angle d'allumage et/ou du taux de remplissage des cylindres est interrompue en fonction du régime de rotation du moteur et/ou de la vitesse du véhicule.

2. Procédé selon la revendication 1, **caractérisé en ce que** la modification est réalisée pendant le démarrage du véhicule automobile depuis l'arrêt.

3. Procédé selon la revendication 2, **caractérisé en ce que** dans une première phase qui suit le début du démarrage, l'angle d'allumage et le taux de remplissage des cylindres sont modifiés et **en ce que** si la vitesse du véhicule est supérieure à une valeur prédéterminée, seul l'angle d'allumage est encore modifié après un premier passage par zéro de l'écart entre les régimes de rotation.

4. Procédé selon au moins l'une des revendications précédentes, **caractérisé en ce que** la modification de l'angle d'allumage est interrompue si la régulation de la marche à vide intervient de manière croissante sur les couples de rotation dans la direction opposée à la modification de l'angle d'allumage.

5. Procédé selon au moins l'une des revendications précédentes, **caractérisé en ce que** dans le modèle de régime de rotation, un couple de rotation de consigne est converti en le régime de rotation modélisé par l'intermédiaire d'un filtre PT1.

6. Procédé selon la revendication 5, **caractérisé en ce que** le couple de rotation de consigne est déterminé à partir du couple de rotation souhaité par le conducteur en fonction de la position de la pédale d'accélération, compte non tenu du couple de rotation de perte.

7. Procédé selon les revendications 5 ou 6, **caractérisé en ce que** l'écart entre les régimes de rotation est déterminé en soustrayant le régime de rotation effectif du régime de rotation modélisé.

8. Procédé selon au moins l'une des revendications 5 à 7, **caractérisé en ce qu'**un facteur est déterminé à partir du quotient entre le régime de rotation effectif et la vitesse du véhicule automobile par l'intermédiaire d'une ligne caractéristique et est multiplié par l'écart entre les régimes de rotation pour obtenir une partie proportionnelle de la modification du couple de rotation, **en ce qu'**à partir de l'écart entre les régimes de rotation, une partie intégrale de la modification du couple de rotation est déterminée par l'intermédiaire d'un intégrateur et **en ce que** la somme de la partie proportionnelle et de la partie intégrale de la modification du couple de rotation est déduite du couple de rotation de consigne avant d'être introduite dans le filtre PT1.

9. Procédé selon la revendication 8, **caractérisé en ce qu'**une amplification est déterminée comme valeur d'entrée de l'intégrateur à partir du quotient entre le régime de rotation effectif et la vitesse du véhicule automobile, par l'intermédiaire d'une ligne caractéristique.

10. Procédé selon au moins l'une des revendications 5 à 9, **caractérisé en ce qu'**une amplification est déterminée comme valeur d'entrée dans le filtre PT1 à partir du quotient entre le régime de rotation effectif et la vitesse du véhicule automobile par l'intermédiaire d'une ligne caractéristique.

11. Procédé selon au moins l'une des revendications 5 à 10, **caractérisé en ce qu'**une constante de temps est déterminée en tant que valeur d'entrée dans le filtre PT1 à partir du quotient entre le régime de rotation effectif et la vitesse du véhicule automobile par l'intermédiaire d'une ligne caractéristique.

12. Procédé selon au moins l'une des revendications précédentes, **caractérisé en ce qu'**une condition de branchement de la modification de l'instant d'allumage et du taux de remplissage des cylindres est déterminée à partir d'au moins une valeur prédéterminée qui concerne le véhicule automobile.

13. Procédé selon la revendication 12, **caractérisé en ce que** la ou les valeurs prédéterminées comprennent une valeur d'erreur provenant de la détermination de la vitesse du véhicule, une valeur d'erreur provenant de la détermination du régime de rotation du moteur, un bit de marche à vide, une condition "intervention active sur le couple" et/ou la vitesse du véhicule.

14. Procédé selon au moins l'une des revendications précédentes, **caractérisé en ce que** la valeur de l'écart entre le régime de rotation est multipliée par une valeur provenant d'une ligne caractéristique qui correspond à l'écart entre les vitesses de rotation et la partie proportionnelle de la modification nécessaire du couple de rotation, **en ce que** la valeur de la modification du régime de rotation effectif est multipliée par une valeur provenant d'une ligne caractéristique qui correspond à la modification du régime de rotation effectif pour obtenir la partie différentielle de la modification nécessaire du couple de rotation et **en ce que** la partie proportionnelle et la partie différentielle de la modification du couple de rotation sont additionnées pour former la sortie du régulateur d'angle d'allumage et/ou de taux de remplissage des cylindres.

15. Procédé selon la revendication 14, **caractérisé en ce que** la valeur maximale et la valeur minimale de la sortie du régulateur sont limitées.

16. Procédé selon les revendications 14 où 15, **caractérisé en ce que** la sortie du régulateur du taux de remplissage des cylindres est multipliée par un facteur prédéterminé.

17. Régulateur de démarrage pour moteur à combustion interne d'un véhicule automobile, configuré pour mettre en oeuvre un procédé selon l'une des revendications 1 à 16 et présentant un premier dispositif (32) qui imite le régime de rotation du moteur à combustion interne en fonction de la position de la pédale d'accélérateur en tant que régime de rotation modélisé (14), au moyen d'un modèle (46) du régime de rotation et qui détermine l'écart (58) entre le régime de rotation effectif (12) et le régime de rotation modélisé (14) à partir du modèle (46) de régime de rotation, et un deuxième dispositif (34) qui détermine la sortie d'un régulateur qui agit sur l'angle d'allumage et le taux de remplissage des cylindres en fonction de l'écart (58) entre les régimes de rotation de telle sorte que l'écart (58) entre les régimes de rotation soit minimisé, le premier dispositif (32) qui forme le modèle de régime de rotation comportant un filtre PT1 (46) qui convertit un couple de rotation de consigne (74) en le régime de rotation modélisé (14, 48), le premier dispositif (32) comportant un intégrateur (76) qui fait rétroagir la partie intégrale de l'écart (78) entre les régimes de rotation sur le couple de rotation de consigne (44).

18. Régulateur de démarrage selon la revendication 17, **caractérisé en ce qu'**un troisième dispositif (36) est prévu pour déterminer un instant d'activation et un instant de désactivation de la sortie du régulateur qui agit sur l'angle d'allumage et le taux de remplissage des cylindres du deuxième dispositif (34) en fonction de l'écart (58) entre les régimes de rotation et de la vitesse (22) du véhicule à chaque instant.

19. Régulateur de démarrage selon la revendication 17, **caractérisé en ce que** le premier dispositif (32) comporte un observateur de Luenberger qui fait rétroagir une fraction proportionnelle de l'écart (70) entre les régimes de rotation sur le couple de rotation de consigne (44).
